# EUROPEAN PATENT APPLICATION

(11) **EP 4 543 136 A1**
(43) Date of publication of application: **23.04.2025**
(21) Application number: 23824025.3
(22) Date of filing: 12.01.2023
(51) Int. Cl.: H04W 76/28, H04W 52/02, H04W 24/02

(54) **CDRX MANAGEMENT**

(30) Priority: 17.06.2022 US 202263353027 P
(71) Applicant: LG Electronics Inc., Yeongdeungpo-gu Seoul 07336 (KR)
(72) Inventor: KIM, Hyunsook, Seoul 06772 (KR)
(74) Representative: Mooser, Sebastian Thomas
(86) International application number: PCT/KR2023/000565
(87) International publication number: WO 2023/243795

(57) **Abstract**

One disclosure of the present specification provides a method by which a base station performs communication. The method comprises the steps of: receiving analytics information related to power saving of a user equipment (UE) from a network node from the UE; determining a connected discontinuous reception (CDRX) configuration for the UE on the basis of the analytics information; and transmitting the CDRX configuration to the UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL PROBLEM

We need a way to control CDRX management by considering the power consumption of the device in real time.

### TECHNICAL SOLUTION

Determine the CDRX value based on analytics information that considers the power consumption of the device.

### ADVANTAGEOUS EFFECTS

The present specification may have various effects.

For example, efficiency can be improved by changing the CDRX value of the terminal by utilizing analytics information related to the power consumption of the terminal.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows an example of a 5G system architecture.
FIG. 6 shows an example of a DRX cycle.
FIG.7 shows a procedure according to the first embodiment of the present specification.
FIG. 8 shows a procedure according to the second embodiment of the present specification.
FIG. 9 shows the procedure of the base station according to the disclosure of this specification.
FIG. 10 shows the procedure of the UE according to the disclosure of this specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

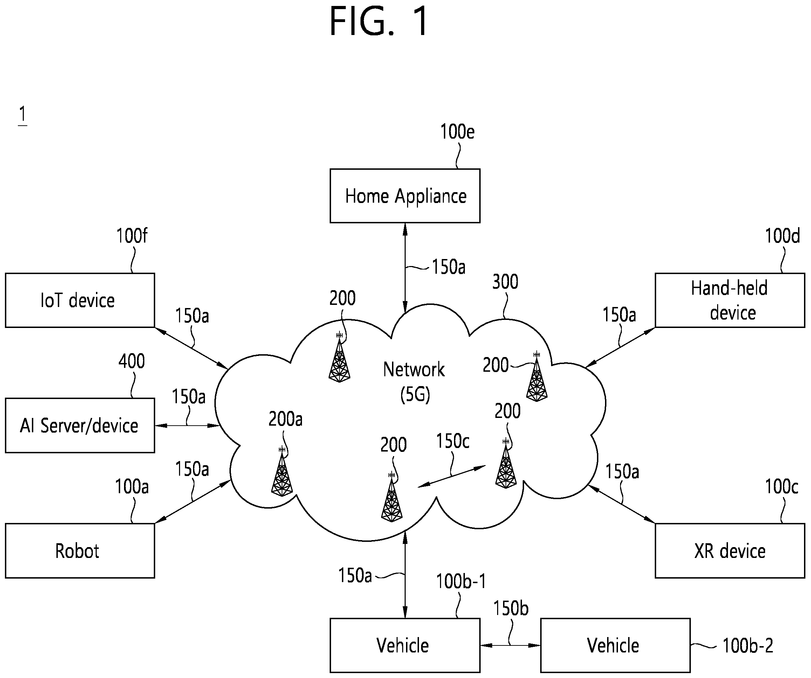

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

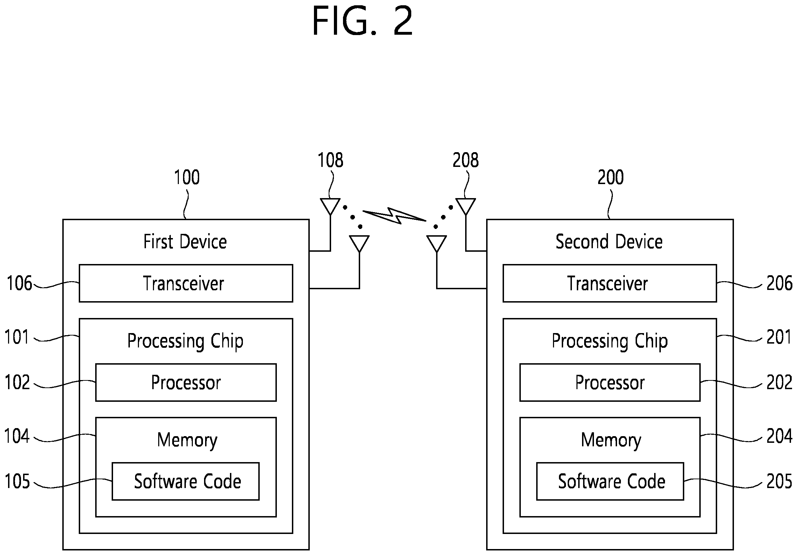

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

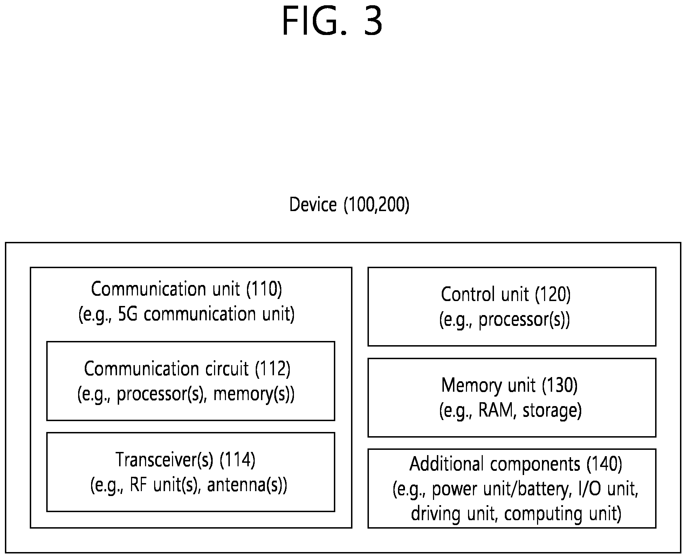

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

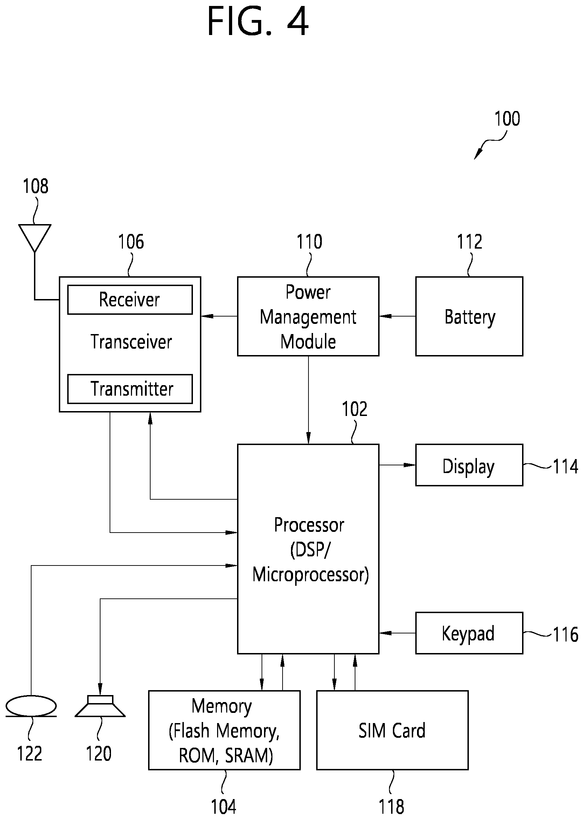

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

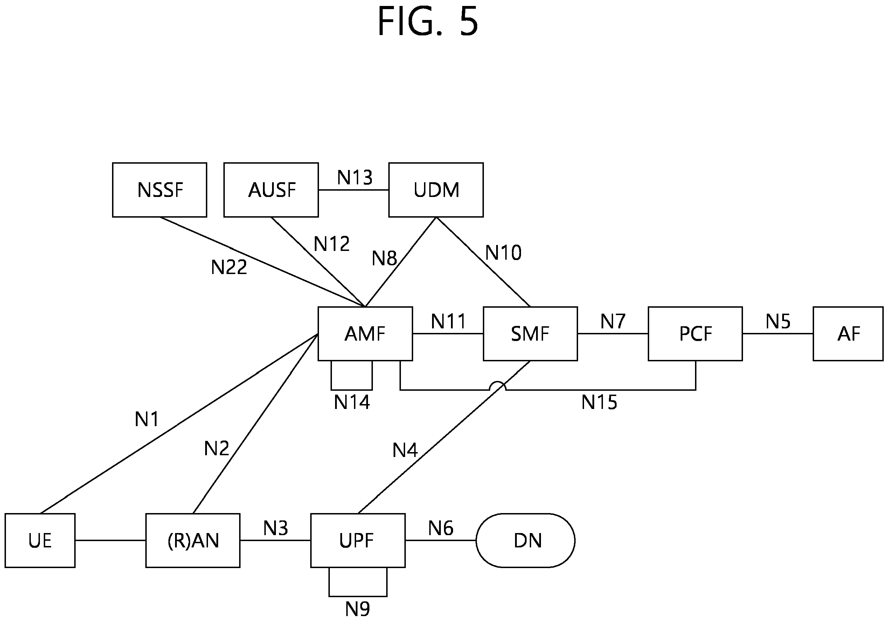

**FIG. 5** **shows an example of a 5G system architecture.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

Describe the NWDAF.

The NWDAF is part of the 5G system structure exemplified in FIG. 5. The NWDAF interacts with different entities with different purposes, including
- (directly or via NEF) Data collection based on subscriptions to events provided by AMF, SMF, PCF, UDM, AF, and OAM (Operation Administration Maintenance)
- retrieval of information from data repositories (e.g., UDR via UDM for subscriber-related information)
- retrieval of information about NFs (e.g., from NRFs for NF-related information)
- Provision of analytics information (analytics) to consumers on demand

Single or multiple NWDAF instances may be deployed in a Public Land Mobile Network (PLMN). When multiple NWDAF instances are deployed, the 5G system architecture may deploy the NWDAF as a central NF, a collection of distributed NFs, or a combination of both.

Where multiple NWDAF instances exist, not all NWDAF instances need to provide the same type of analytics information, i.e., some NWDAF instances may specialize in providing certain types of analytics information. The Analytics ID Information Element (IE) is used to identify the types of supported analytics information that an NWDAF can generate.

NWDAF instances can be co-located with 5GS NFs.

The 5G system architecture allows NWDAF to collect data from arbitrary 5GC NFs. The NWDAF belongs to the same PLMN as the 5GC NF providing the data.

Nnf interfaces are defined as interfaces through which the NWDAF can request a subscription to data delivery for a specific context, unsubscribe from data delivery, and request specific reporting of data for a specific context.

The 5G system structure allows the NWDAF to invoke the OAM service to retrieve management data from the OAM.

The 5G system structure also allows any 5GC NF to request network analysis information from the NWDAF. The NWDAF belongs to the same PLMN as the 5GC NF that uses the analytics information.

The Nwdaf interface is defined as an interface through which a 5GC NF can request a subscription to the delivery of network analysis information for a specific context, unsubscribe from the delivery of network analysis information, and request specific reporting of network analysis information for a specific context.

The NWDAF provides analytics information to the 5GC NF and OAM.

Analytical information is either statistical information about past events or predictive information.

Various NWDAF instances can exist in the 5GC and can be specialized for different types of analytical information. The capabilities of an NWDAF instance are described in the NWDAF profile stored in the NRF.

To assist NFs that are consumers of analytics information by searching for NWDAF instances that can provide specific types of analytics information, each NWDAF instance provides, in addition to other NRF registration elements in the NF profile, a list of analytics information IDs that it supports when registering with the NRF. Other NFs that need to discover an NWDAF instance that provides support for a specific type of analytics information can query the NRF and include the analytics information IDs that identify the desired type of analytics information for their purposes.

Consumers, such as 5GC NFs and OAMs, determine how to use the data analytics information provided by the NWDAF.

The interaction between the 5GC NF and the NWDAF takes place within the PLMN.

The NWDAF has no knowledge of the NF application logic. NWDAF may use subscription data for statistical purposes only.

NWDAF service consumers use NWDAF discovery principles to select NWDAFs that support the requested analytics information.

### <DRX (Discontinuous Reception)>

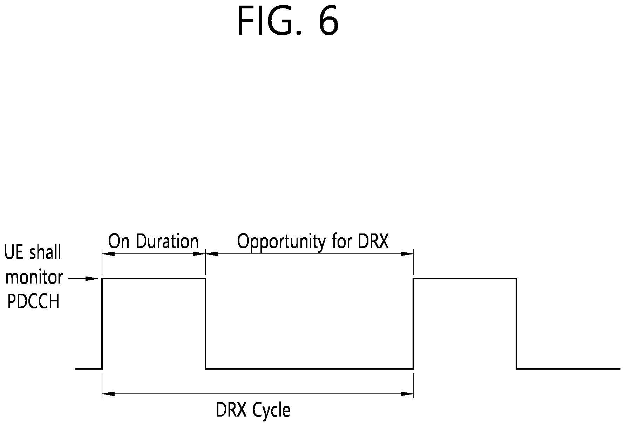

**FIG. 6** **shows an example of a DRX cycle.**

In RRC connected mode, the UE's PDCCH monitoring activity is managed by DRX, BA and DCP.

Once DRX is configured, the UE does not need to continuously monitor the PDCCH. DRX is characterized by the following features:
- on-duration: The period of time the UE waits to receive a PDCCH after waking up. If the UE successfully decodes the PDCCH, the UE stays awake and starts the inactivity-timer.
- inactivity-timer: The period of time from the last successful decoding of a PDCCH that the UE can wait to successfully decode a PDCCH and, if it fails, return to the sleep state. The UE shall restart the inactivity timer after a single successful decoding of the PDCCH for the first transmission only (i.e. not for retransmissions).
- Retransmission timer (retransmission-timer): The period of time until a retransmission is expected;
- cycle: Specifies a periodic repetition of the on-duration followed by a possible inactivity period (see FIG. 6).
- active-time: The total duration during which the UE monitors the PDCCH. It includes i) the "on-duration" of the DRX cycle, ii) the time during which the UE performs continuous reception while the inactivity timer has not expired, and iii) the time during which the UE performs continuous reception while waiting for a retransmission opportunity.

The MAC entity may be configured by the RRC with a DRX function that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI and SL semi-permanent scheduling V-RNTI. The MAC entity shall also monitor the PDCCH in accordance with the requirements in other clauses of this specification. When DRX is set when in RRC_CONNECTED, for all active serving cells, the MAC entity may monitor the PDCCH discontinuously using the DRX behavior specified in this clause. Otherwise, the MAC entity shall monitor the PDCCH.

The RRC controls the DRX behavior by setting the following parameters
- drx-onDurationTimer: Duration at the start of the DRX cycle;
- drx-SlotOffset: Delay before the start of drx-onDurationTimer
- drx-InactivityTimer: Duration after a PDCCH opportunity where the PDCCH indicates a new UL, DL, or SL transmission to the MAC entity;
- drx-RetransmissionTimerDL (per DL HARQ process, excluding broadcast processes): Maximum duration until a DL retransmission is received;
- drx-RetransmissionTimerUL (per UL HARQ process): Maximum duration until a grant for a UL retransmission is received;
- drx-LongCycleStartOffset: drx-StartOffset that defines the Long DRX cycle and the subframe at which the Long and Short DRX cycles start;
- drx-ShortCycle (optional): Short DRX cycle
- drx-ShortCycleTimer (optional): The period of time the UE shall follow the short DRX cycle;
- drx-HARQ-RTT-TimerDL (per DL HARQ process, excluding broadcast processes): Minimum duration before DL allocation for HARQ retransmission is expected by the MAC entity;
- drx-HARQ-RTT-TimerUL (per UL HARQ process): Minimum duration before a UL HARQ retransmission acknowledgment is expected by the MAC entity;
- drx-RetransmissionTimerSL (per SL HARQ process): Maximum duration until an acknowledgment for SL retransmission is received;
- drx-HARQ-RTT-TimerSL (per SL HARQ process): Minimum duration before an SL retransmission acknowledgment is expected by the MAC entity;
- ps-Wakeup (optional): Setting to start the associated drx-onDurationTimer if DCP is monitored but not detected.
- ps-TransmitOtherPeriodicCSI (optional): Setting to report a periodic CSI other than L1-RSRP on the PUCCH for the time indicated by the drx-onDurationTimer if DCP is set but the associated drx-onDurationTimer is not started;
- ps-TransmitPeriodicL1-RSRP (optional): Setting for transmitting periodic CSI that is L1-RSRP on the PUCCH for the time indicated by the drx-onDurationTimer when DCP is set but the associated drx-onDurationTimer has not started;
- downlinkHARQ-FeedbackDisabled (optional): Setting to enable HARQ feedback per DL HARQ process.
- uplinkHARQ-Mode (optional): Setting to set HARQmodeA or HARQmodeB per UL HARQ process.

### <Problems to be solved in the disclosure of this specification>

As one of the ultimate targets of 5G evolution and 6G networks, zero-touch configuration/operation is gaining increasing attention. Recently, research has been conducted to utilize the information analysis/prediction capabilities of NWDAF in the 3GPP 5G core network to perform network automation, as well as to utilize information analysis/prediction capabilities in the base station (NG-RAN).

In particular, as traffic models that are different from conventional service types, such as AI-supported services and XR services, emerge, it has become necessary to provide effective services that are tailored to the characteristics of each service.

According to the prior art, the CDRX (connected discontinuous reception) value is determined by the configuration of the base station, and recent studies have discussed that XR/media traffic characteristics, traffic pattern and statistics may be required as core network assistant information for effective CDRX management. However, there has been no attempt to control CDRX management by considering the power consumption of the device in real time.

### <Disclosure of the present Specification>

### I. Functions of Network Nodes

### (1) Network Control Node (e.g., NWDAF)

- The network control node (e.g., NWDAF) may obtain information related to power consumption of the terminal (e.g., device battery life, etc.) from the network node. The network node (e.g., NWDAF) providing information related to power consumption of the terminal may obtain the information directly from the terminal. Or, the network node (e.g., NWDAF) may indirectly obtain information from a base station, an OAM node, a third network node, and an AF.
- The network control node (e.g., NWDAF) may analyze statistical/predicted values for the battery life of the terminal. In particular, the network control node (e.g., NWDAF) may analyze statistical/predicted values for (battery life) according to whether a specific service is used.
- The network control node (e.g., NWDAF) may send the analyzed statistical values and predicted values to the (e)CDRX service supporting base station of the terminal or another control network node (e.g., AMF) that controls the (e)DRX service. Since NWDAF does not have a direct interface with the base station according to the current standard, NWDAF may transmit to the base station via other network nodes such as AMF/SMF or OAM.

### (2) analytics function node of access network (can be co-located to the base station/NG-RAN or OAM node)

- The analytics function node may obtain information related to the power consumption of the device (e.g., device battery life, etc.) from other nodes. The network node providing the power consumption related information of the device may obtain the information directly from the device. Alternatively, the network node may obtain the information indirectly from a base station, an OAM node, a third network node, an AF, etc.
- The analytics functional node may analyze statistical/predictive values for the battery life of the device. In particular, the analytics function node may analyze statistical/predictive values for battery life based on whether certain services are used or not.
- The analytics function node may send the analyzed statistical values and predicted values to the (e)CDRX service supporting base station of the terminal or another network node controlling the (e)DRX service. If there is no direct interface with the base station, the analytics function node may send it via another node such as a core network node or another base station, OAM, etc.

### (3) Base Station (NG-RAN)

- The base station may use the information obtained above to determine whether to change the (e)CDRX value of the terminal. The base station may update the (e)CDRX value to be applied to the terminal.
- The base station may transmit the changed (e)CDRX value to the terminal.

### (4) Network Control Node (e.g., AMF)

- The network control node (e.g., AMF) may use the acquired information to determine whether the (e)DRX value of the terminal is affected.
- The network control node (e.g., AMF) may update the relevant information to the base station.

In this specification, a direct change of the (e)CDRX value is given as an example, but since the (e)CDRX value may be affected by the idle mode (e)DRX value according to the prior art, it may be used to determine a change of the idle mode (e)DRX value as well as a direct change of the (e)CDRX value itself.

The following drawings are created to explain specific examples of this specification. The names of specific devices or names of specific signals/messages/fields described in the drawings are presented as examples, and therefore, the technical features of this specification are not limited to the specific names used in the drawings below.

### II. First Embodiment

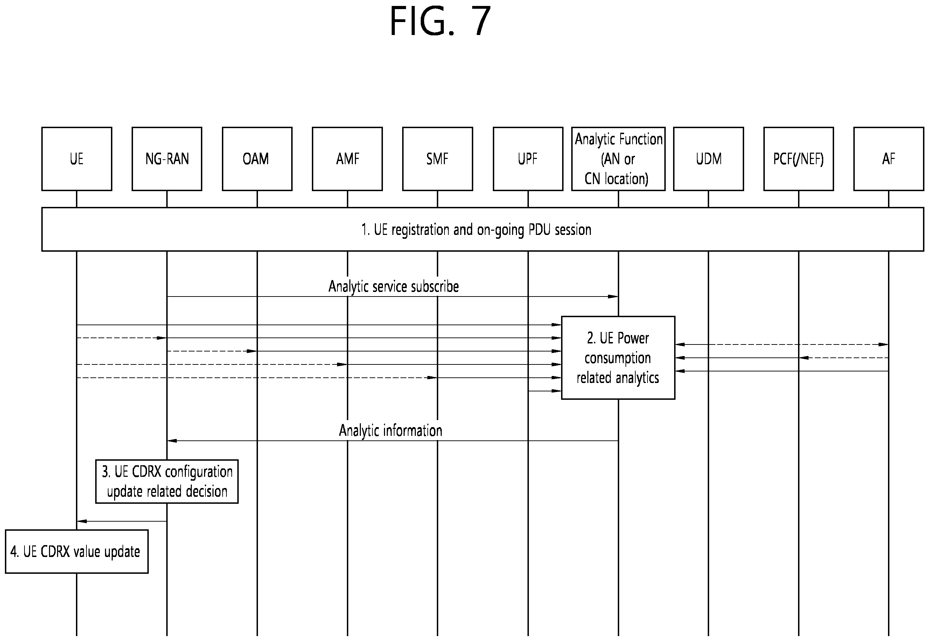

### FIG.7 shows a procedure according to the first embodiment of the present specification.

Analytic information may be utilized by the base station.
1. The terminal is connected to the 5G system and may receive a specific service. For example, the terminal may be provided with a service by creating a PDU session for an XR service.
2. The base station may subscribe to a service requesting analytics with an analytic function node (analytic service subscribe). The analytic function node may exist in an access network or a core network. The analytic function node may exist alone or may be co-located with another function node. If there is no direct interface with the analytic function node, the base station may subscribe to a service requesting analytics to the analytic function node via another node.

In particular, this step may be for the purpose of obtaining statistical values and predicted values of information related to UE power consumption by the base station. The base station may also obtain analytics of NWDAF provided in the related art, such as statistical values and predicted values for service experience analytics.
3. The base station may evaluate the CDRX value of the terminal based on the analytics information. The base station may determine the CDRX configuration for the terminal based on the analytics information. The base station may determine whether to update the CDRX value. At this time, the base station may consider the service type such as XR, the capability of the terminal, and the characteristics of the subscriber.
4. The base station may transmit the updated CDRX value to the terminal. The base station may transmit the CDRX configuration to the terminal. The terminal may apply the CRDX value.

### III. Second embodiment

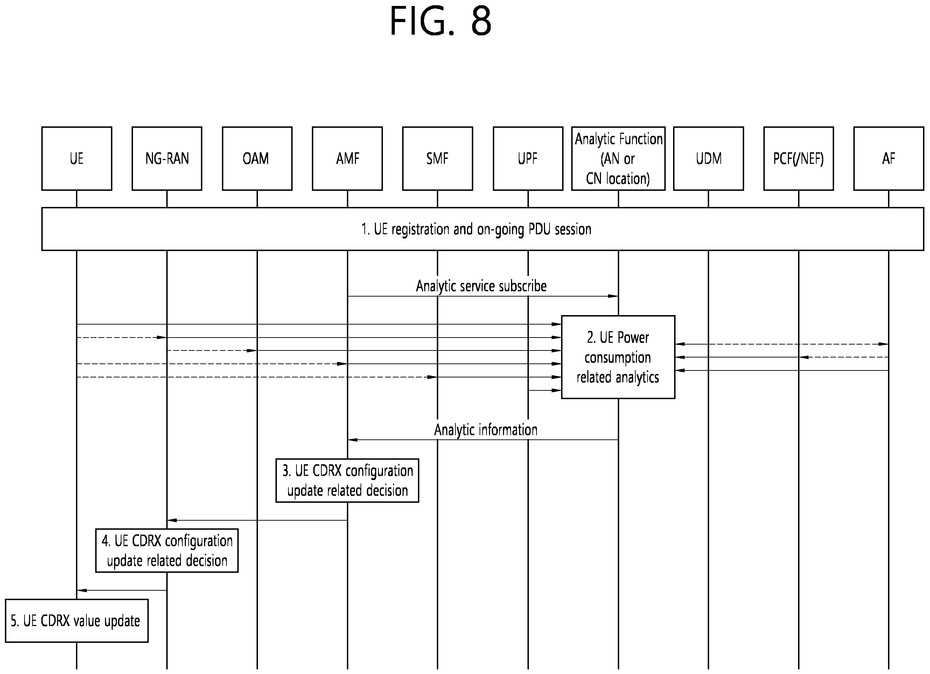

**FIG. 8** **shows a procedure according to the second embodiment of the present specification.**

The analytic information can be utilized by the AMF.
1. The terminal is connected to the 5G system and may receive a specific service. For example, the terminal may establish a PDU session for the XR service and receive the service.
2. The AMF may subscribe to a service that requests analytics to an analytic function node. The analytic function node may exist in the access network or the core network. The analytic function node may be a Network Data Analytics Function (NWDAF) that is typically present in the core network. The analytic function node may exist alone or may be co-located with other function nodes. If there is no direct interface with the analytic function node, the AMF may subscribe to a service that requests analytics to the analytic function node via another node.

In particular, this step may be for the purpose of obtaining statistical values and predicted values of information related to UE power consumption by the AMF. The AMF may also obtain analytics of the NWDAF provided in the prior art, such as statistical values and predicted values for service experience analytics.
3. The AMF may evaluate the CDRX value of the terminal based on the analytics information. The AMF may determine whether to update values that may affect the CDRX. At this time, the AMF may consider the service type such as XR or the capability of the terminal and the characteristics of the subscriber.
4. The AMF may send the updated DRX related values to the base station. Based on the received information, the base station may evaluate the CDRX value of the terminal and decide whether to update the CDRX value. At this time, the base station may consider the service type such as XR or the capability of the terminal and the characteristics of the subscriber.
5. The base station may send the updated CDRX value to the terminal. The terminal may apply the CRDX value.

The embodiment of this specification is not only targeted at XR service, but can be utilized/applied universally for various services.

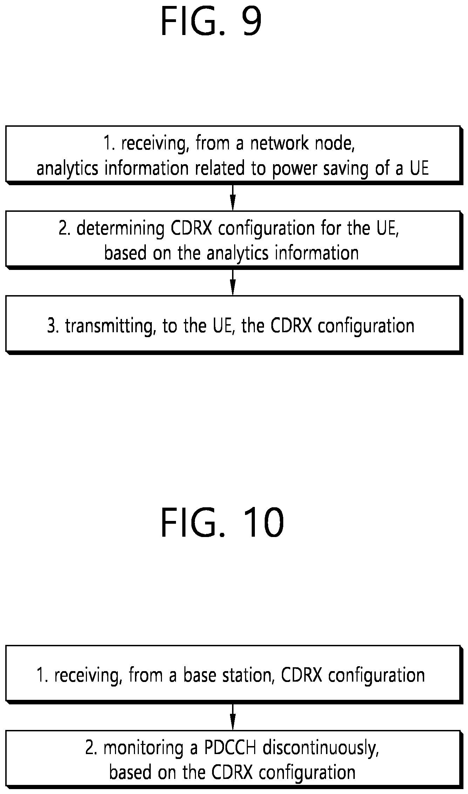

**FIG. 9** **shows the procedure of the base station according to the disclosure of this specification.**
1. The base station may receive, from a network node, analytics information related to power saving of a UE (User Equipment).
2. The base station may determine CDRX (connected discontinuous reception) configuration for the UE, based on the analytics information.
3. The base station may transmit, to the UE, the CDRX configuration.

The network node may a NWDAF (Network Data Analytics Function).

The base station may perform subscription to the network node for the analytics information.

The step of determining the CDRX configuration may be: updating a existing CDRX configuration.

The CDRX configuration may include CDRX value for the UE.

**FIG. 10** **shows the procedure of the UE according to the disclosure of this specification.**
1. The UE may receive, from a base station, CDRX (connected discontinuous reception) configuration.
2. The UE may monitor a PDCCH (Physical downlink control channel) discontinuously, based on the CDRX configuration,

The CDRX configuration may be based on power saving of the UE.

Hereinafter, an apparatus for performing communication according to some embodiments of the present specification will be described.

For example, an apparatus may include a processor, a transceiver, and a memory.

For example, a processor may be configured to be operably coupled with a memory and a processor.

The processor may perform: receiving, from a network node, analytics information related to power saving of a UE (User Equipment); determining CDRX (connected discontinuous reception) configuration for the UE, based on the analytics information; transmitting, to the UE, the CDRX configuration.

Hereinafter, a processor for providing communication according to some embodiments of the present specification will be described.

The processor is configured to receiving, from a network node, analytics information related to power saving of a UE (User Equipment); determining CDRX (connected discontinuous reception) configuration for the UE, based on the analytics information; transmitting, to the UE, the CDRX configuration.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, from a network node, analytics information related to power saving of a UE (User Equipment); determining CDRX (connected discontinuous reception) configuration for the UE, based on the analytics information; transmitting, to the UE, the CDRX configuration.

The present specification may have various effects.

For example, efficiency can be improved by changing the CDRX value of the terminal by utilizing analytics information related to the power consumption of the terminal.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a base station, comprising:
receiving, from a network node, analytics information related to power saving of a UE (User Equipment);
determining CDRX (connected discontinuous reception) configuration for the UE, based on the analytics information;
transmitting, to the UE, the CDRX configuration.

2. The method of claim 1,
wherein the network node is a NWDAF (Network Data Analytics Function).

3. The method of claim 1, further comprising:
performing subscription to the network node for the analytics information.

4. The method of claim 1,
wherein the step of determining the CDRX configuration is: updating a existing CDRX configuration.

5. The method of claim 1,
wherein the CDRX configuration includes CDRX value for the UE.

6. A base station, to perform communication, comprising:
at least one transceiver;
at least one processor; and
at least one memory storing instructions and being operably electrically connected to the at least one processor,
wherein, based on the instructions being executed by the at least one processor, the at least one processor performs operation comprising:
receiving, from a network node, analytics information related to power saving of a UE (User Equipment);
determining CDRX (connected discontinuous reception) configuration for the UE, based on the analytics information;
transmitting, to the UE, the CDRX configuration.

7. The base station of claim 6,
wherein the network node is a NWDAF (Network Data Analytics Function)

8. The base station of claim 6, wherein the operation further comprises:
performing subscription to the network node for the analytics information.

9. The base station of claim 6,
wherein the step of determining the CDRX configuration is: updating a existing CDRX configuration.

10. The base station of claim 6,
wherein the CDRX configuration includes CDRX value for the UE.

11. A method for performing communication, performed by a UE (User Equipment), comprising:
receiving, from a base station, CDRX (connected discontinuous reception) configuration;
monitoring a PDCCH (Physical downlink control channel) discontinuously, based on the CDRX configuration,
wherein the CDRX configuration is based on power saving of the UE.

12. A UE (User Equipment), to perform communication, comprising:
at least one transceiver;
at least one processor; and
at least one memory storing instructions and being operably electrically connected to the at least one processor,
wherein, based on the instructions being executed by the at least one processor, the at least one processor performs operation comprising:
receiving, from a base station, CDRX (connected discontinuous reception) configuration;
monitoring a PDCCH (Physical downlink control channel) discontinuously, based on the CDRX configuration,
wherein the CDRX configuration is based on power saving of the UE.

13. An apparatus in mobile communication, comprising:
at least one processor; and
at least one memory storing instructions and being operably electrically connected to the at least one processor,
wherein, based on the instructions being executed by the at least one processor, the at least one processor performs operation comprising:
receiving, from a network node, analytics information related to power saving of a UE (User Equipment);
determining CDRX (connected discontinuous reception) configuration for the UE, based on the analytics information;
transmitting, to the UE, the CDRX configuration.

14. A non-volatile computer readable storage medium having recorded instructions,
wherein the instructions, based on being executed by one or more processors, cause the one or more processors to:
receiving, from a network node, analytics information related to power saving of a UE (User Equipment);
determining CDRX (connected discontinuous reception) configuration for the UE, based on the analytics information;
transmitting, to the UE, the CDRX configuration.
